(19) Europäisches Patentamt
European Patent Office
Office européen des brevets

(11) EP 1 303 189 B1

(12) EUROPÄISCHE PATENTSCHRIFT

(45) Veröffentlichungstag und Bekanntmachung des Hinweises auf die Patenterteilung:
**24.08.2005 Patentblatt 2005/34**

(21) Anmeldenummer: **01940579.4**

(22) Anmeldetag: **18.06.2001**

(51) Int Cl.7: **A01N 47/38**
// (A01N47/38, 47:36)

(86) Internationale Anmeldenummer:
**PCT/EP2001/006840**

(87) Internationale Veröffentlichungsnummer:
**WO 2002/001957 (10.01.2002 Gazette 2002/02)**

(54) **SELEKTIVE HERBIZIDE AUF BASIS VON ARYLSULFONYLAMINOCARBONYLTRIAZOLINONEN**
ARYL SULFONYL AMINO CARBONYL TRIAZOLE BASED SELECTIVE HERBICIDES
HERBICIDES SELECTIFS A BASE D'ARYLSULFONYLAMINOCARBONYLTRIAZOLINONES

(84) Benannte Vertragsstaaten:
**AT BE CH CY DE DK ES FI FR GB GR IE IT LI LU MC NL PT SE TR**

(30) Priorität: **30.06.2000 DE 10031825**

(43) Veröffentlichungstag der Anmeldung:
**23.04.2003 Patentblatt 2003/17**

(60) Teilanmeldung:
**05007713.0 / 1 561 378**

(73) Patentinhaber: **Bayer CropScience AG**
**40789 Monheim (DE)**

(72) Erfinder:
- **FEUCHT, Dieter**
**40789 Monheim (DE)**
- **DAHMEN, Peter**
**41470 Neuss (DE)**
- **DREWES, Mark, Wilhelm**
**40764 Langenfeld (DE)**
- **PONTZEN, Rolf**
**42799 Leichlingen (DE)**
- **KREMER, Mathias**
**51399 Burscheid (DE)**
- **MÜLLER, Klaus-Helmut**
**40593 Düsseldorf (DE)**

(74) Vertreter: **Schwenk, Norbert et al**
**Bayer CropScience GmbH**
**Gebäude K 607**
**65926 Frankfurt am Main (DE)**

(56) Entgegenhaltungen:
**WO-A-01/37652**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue herbizide, synergistische Wirkstoffkombinationen, die aus bekannten Arylsulfonylaminocarbonyltriazolinonen einerseits und mit iodosulfuron-methyl-sodium andererseits bestehen und mit besonders gutem Erfolg zur selektiven Unkrautbekämpfung in verschiedenen Nutzpflanzenkulturen verwendet werden können.

Arylsulfonylaminocarbonyltriazolinone sind als breit wirksame Herbizide Gegenstand einer Reihe von Patentanmeldungen (vgl. EP-A-341489, EP-A-422469, EP-A-425948, EP-A-431291, EP-A-507171, EP-A-534266, WO-A-96/11188, WO-A-96/27590, WO-A-96/27591, WO-A-97/03056). Die bekannten Sulfonylaminocarbonyltriazolinone weisen jedoch unter gewissen Umständen noch Wirkungslücken auf.

Eine Reihe von herbiziden Wirkstoffkombinationen auf Basis von Arylsulfonylaminocarbonyltriazolinonen sind ebenfalls bereits bekannt geworden (vgl. WO-A-98/12923). Die Eigenschaften dieser Wirkstoffkombinationen sind jedoch ebenfalls nicht in allen Belangen zufriedenstellend.

Überraschenderweise wurde nun gefunden, daß eine Reihe von bekannten Wirkstoffen aus der Reihe der Arylsulfonylaminocarbonyltriazolinone bei gemeinsamer Anwendung mit iodosulfuron-methyl-sodium ausgesprochen synergistische Effekte hinsichtlich der Wirkung gegen Unkräuter zeigen und besonders vorteilhaft als breit wirksame Kombinationspräparate zur selektiven Bekämpfung von Unkräutern in Nutzpflanzenkulturen, wie z.B. Gerste, Mais, Reis und Weizen, verwendet werden können.

Gegenstand der Erfindung sind selektiv-herbizide Mittel, gekennzeichnet durch einen wirksamen Gehalt an einer Wirkstoffkombination bestehend aus

(a) einem Arylsulfonylaminocarbonyltrizaolinon der allgemeinen Formel (I)

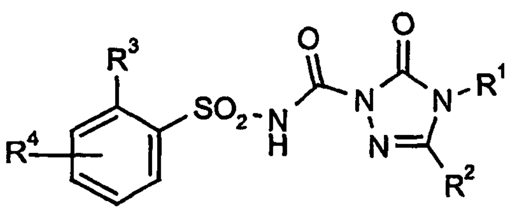

(I)

in welcher

$R^1$ für Wasserstoff, Hydroxy, Amino, Alkylidenamino oder für jeweils gegebenenfalls substituiertes Alkyl, Alkenyl, Alkinyl, Alkoxy, Alkenyloxy, Alkylamino, Dialkylamino, Cycloalkyl, Cycloalkylalkyl, Cycloalkylamino, Aryl oder Arylalkyl steht,

$R^2$ für Wasserstoff, Hydroxy, Mercapto, Amino, Cyano, Halogen oder für jeweils gegebenenfalls substituiertes Alkyl, Alkoxy, Alkylthio, Alkylamino, Dialkylamino, Alkenyl, Alkinyl, Alkenyloxy, Alkinyloxy, Alkenylthio, Alkinylthio, Alkenylamino, Alkinylamino, Cycloalkyl, Cycloalkyloxy, Cycloalkylthio, Cycloalkylamino, Cycloalkylalkyl, Aryl, Aryloxy, Arylthio, Arylamino oder Arylalkyl steht,

$R^3$ für Nitro, Cyano, Halogen oder für jeweils gegebenenfalls substituiertes Alkyl, Alkylcarbonyl, Alkoxy, Alkoxycarbonyl, Alkylthio, Alkylsulfinyl, Allcylsulfonyl, Alkylamino, Alkenyl, Alkenyloxy, Alkenylthio, Alkenylamino, Alkinyl, Alkinyloxy, Alkinylthio, Cycloalkyl, Cycloalkyloxy, Cycloalkylthio, Cycloalkylamino, Aryl, Aryloxy, Arylthio, Arylsulfinyl, Arylsulfonyl oder Arylamino steht, und

$R^4$ für Wasserstoff, Nitro, Cyano, Halogen oder für jeweils gegebenenfalls substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Allcenylthio, Alkenylamino, Alkinyl, Alkinyloxy, Alkinylthio, Cycloalkyl, Cycloalkyloxy,

Cycloalkylthio, Cycloalkylamino, Aryl, Aryloxy, Arylthio, Arylsulfinyl, Arylsulfonyl oder Arylamino steht,
und/oder einem Salz einer Verbindung der Formel (I)

("Wirkstoffe der Gruppe 1")
und der Verbindung N-(4-Methoxy-6-Methyl-1,3,5-triazin-2-yl)--N'-(5-iod-2-methoxycarbonylophenylsulfonyl)-harnstoff-Natriumsalz(iodosulfuron-methyl-sodium)
"(Wirkstoff der Gruppe 2"),

sowie gegebenenfalls

(c) einer die Kulturpflanzen-Verträglichkeit verbessernde Verbindung aus der folgenden Gruppe von Verbindungen: 4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (Dicyclonon, .BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl - vgl. auch verwandte Verbindungen in EP-A-86750, EP-A-94349, EP-A-191736, EP-A-492366), 3-(2-Chlor-benzyl)-1-(1-methyl-1-phenyl-ethyl)-harnstoff (Cumyluron), α-(Cyano-methoximino)-phenylacetonitril (Cyometrinil), 2,4-Dichlor-phenoxyessigsäure (2,4-D), 1-(1-Methyl-1-phenyl-ethyl)-3-(4-methyl-phenyl)-harnstoff (Daimuron, Dymron), 3,6-Dichlor-2-methoxy-benzoesäure (Dicamba), Piperidin-1-thiocarbonsäure-S-1-methyl-1-phenyl-ethylester (Dimepiperate), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazole-ethyl - vgl. auch verwandte Verbindungen in EP-A-174562 und EP-A-346620), 2-Chlor-4-trifluormethyl-thiazol-5-carbonsäure-phenyhnethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl - vgl. auch verwandte Verbindungen in WO-A-95/07897), Diethyl-1-(2,4-dichlor-phenyl)-4,5-dihydro-5-methyl-1H-pyrazol-3,5-dicarboxylat (Mefenpyr-diethyl - vgl. auch verwandte Verbindungen in WO-A-91/07874) 2-Dichlormethyl-2-methyl-1,3-dioxolan (MG-191), 1,8 Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlor-phenyl)-5-phenyl-1H-pyrazol-3-carbonsäure-methylester, 1-(2,4-Dichlor-phenyl)-5-methyl-1H-pyrazol-3-carbonsäure-ethylester, 1-(2,4-Dichlor-phenyl)-5-isopropyl-1H-pyrazol-3-carbonsäure-ethylester, 1-(2,4-Dichlor-phenyl)-5-(1,1-dimethyl-ethyl)-1H-pyrazol-3-carbonsäure-ethylester, 1-(2,4-Dichlor-phenyl)-5-phenyl-1H-pyrazol-3-carbonsäure-ethylester (vgl. auch verwandte Verbindungen in EP-A-269806 und EP-A-333131), 5-(2,4-Dichlor-benzyl)-2-isoxazolin-3-carbonsäure-ethylester, 5-Phenyl-2-isoxazolin-3-carbonsäure-ethylester, 5-(4-Fluor-phenyl)-5-phenyl-2-isoxazolin-3-catbonsäure-ethylester (vgl. auch verwandte Verbindungen in WO-A-91/08202), 5-Chlor-chinolin-8-oxy-essigsäure-(1,3-dimethyl-but-1-yl)-ester, 5-Chlor-chinolin-8-oxy-essigsäure-4-allyloxy-butylester, 5-Chlor-chinolin-8-oxy-essigsäure-1-allyloxy-prop-2-yl-ester, 5-Chlor-chinolin-8-oxy-essigsäure-methylester, 5-Chlor-chinolin-8-oxy-essigsäure-ethylester, 5-Chlor-chinolin-8-oxy-essigsäure-allylester, 5-Chlor-chinolin-8-oxy-essigsäure-2-oxo-prop-1-yl-ester, 5-Chlor-chinolin-8-oxy-malonsäure-diethylester, 5-Chlor-chinolin-8-oxy-malonsäure-diallylester, 5-Chlor-chinolin-8-oxy-malonsäure-diethylester (vgl. auch verwandte Verbindungen in EP-A-582198), 2-(4-Carboxy-chroman-4-yl)-essigsäure, 3,3'-Dimethyl-4-methoxy-benzophenon, 1-Brom-4-chlormethylsulfonyl-benzol, N-(2-Methoxy-benzoyl)-4-[(methylamino-carbonyl)-amino]-benzolsulfonamid, N-(2-Methoxy-5-methyl-benzoyl)-4-(cyclopropylaminocarbonyl)-benzolsulfonamid, N-Cyclopropyl-4-[(2-methoxy-5-methyl-benzoyl)-amino-sulfonyl]-benzamid (vgl. WO 99/66795),
("Wirkstoffe der Gruppe 3").

Bevorzugte Bedeutungen der in der vorstehend gezeigten Formel (I) aufgeführten Reste werden im folgenden erläutert.

$R^1$ steht bevorzugt für Wasserstoff, Hydroxy, Amino, $C_2$-$C_6$-Alkylidenamino, für jeweils gegebenenfalls durch Cyano, Halogen oder $C_1$-$C_4$-Alkoxy substituiertes Alkyl, Alkenyl, Alkinyl, Alkoxy, Alkenyloxy, Alkylamino oder Dialkylamino mit jeweils bis zu 6 Kohlenstoffatomen, für jeweils gegebenenfalls durch Cyano, Halogen oder $C_1$-$C_4$-Alkyl substituiertes Cycloalkyl, Cycloalkylalkyl oder Cycloallcylamino mit jeweils 3 bis 6 Kohlenstoffatomen in den Cycloalkylgruppen und gegebenenfalls 1 bis 4 Kohlenstoffatomen im Alkylteil, oder für jeweils gegebenenfalls durch Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl oder Phenyl-$C_1$-$C_4$-alkyl.

$R^2$ steht bevorzugt für Wasserstoff, Hydroxy, Mercapto, Amino, Cyano, Halogen, für jeweils gegebenenfalls durch Cyano, Halogen oder $C_1$-$C_4$-Alkoxy substituiertes Alkyl, Alkoxy, Alkylthio, Alkylamino, Dialkylamino, Alkenyl, Allcinyl, Alkenyloxy, Alkinyloxy, Alkenylthio, Alkinylthio, Alkenylamino oder Alkinylamino mit jeweils bis zu 6 Kohlenstoffatomen, für jeweils gegebenenfalls durch Cyano, Halogen oder $C_1$-$C_4$-Alkyl substituiertes Cycloalkyl, Cycloalkyloxy, Cycloalkylthio, Cycloalkylamino oder Cycloalkylalkyl mit jeweils 3 bis 6 Kohlenstoffatomen in den Cycloalkyl-gruppen und gegebenenfalls 1 bis 4 Kohlenstoffatomen im Alkylteil, oder für jeweils gegebenenfalls durch Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl, Phenoxy, Phenylthio, Phenylamino oder Phenyl-$C_1$-$C_4$-alkyl.

$R^3$ steht bevorzugt für Nitro, Cyano, Halogen, für jeweils gegebenenfalls durch Cyano, Halogen oder $C_1$-$C_4$-Alkoxy substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alldnylthio mit jeweils bis zu 6 Kohlenstoffatomen, für jeweils gegebenenfalls durch Cyano, Halogen oder $C_1$-$C_4$-Alkyl substituiertes Cycloalkyl, Cycloalkyloxy, Cycloalkylthio, Cycloalkylamino mit jeweils 3 bis 6 Kohlenstoffatomen in den Cycloalkylgruppen, oder für jeweils gegebenenfalls durch Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl, Phenoxy, Phenylthio, Phenylsulfinyl, Phenylsulfonyl oder Phenylamino.

$R^4$ steht bevorzugt für Wasserstoff, Nitro, Cyano, Halogen, für jeweils gegebenenfalls durch Cyano, Halogen oder $C_1$-$C_4$-Alkoxy substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy oder Alkinylthio mit jeweils bis zu 6 Kohlenstoffatomen, für jeweils gegebenenfalls durch Cyano, Halogen oder $C_1$-$C_4$-Alkyl substituiertes Cycloalkyl, Cycloalkyloxy, Cycloalkylthio, Cycloalkylamino mit jeweils 3 bis 6 Kohlenstoffatomen in den Cycloalkylgruppen, oder für jeweils gegebenenfalls durch Cyano, Nitro, Halogen, $C_1$-$C_4$-Alkyl, $C_1$-$C_4$-Halogen-alkyl, $C_1$-$C_4$-Alkoxy oder $C_1$-$C_4$-Halogenalkoxy substituiertes Phenyl, Phenoxy, Phenylthio, Phenylsulfinyl, Phenylsulfonyl oder Phenylamino.

$R^1$ steht besonders bevorzugt für Wasserstoff, Amino, für jeweils gegebenenfalls durch Cyano, Fluor, Chlor, Methoxy oder Ethoxy substituiertes Methyl, Ethyl, n- oder i-Propyl, n-, i-, s- oder t-Butyl, Ethenyl, Propenyl, Butenyl, Ethinyl, Propinyl, Butinyl, Methoxy, Ethoxy, n- oder i-Propoxy, n-, i-, s- oder t-Butoxy, Propenyloxy, Butenyloxy, Methylamino, Ethylamino, n- oder i-Propylamino, n-, i-, s- oder t-Butylamino, Dimethylamino oder Diethylamino, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropylmethyl, Cyclobutylmethyl, Cyclopentylmethyl, Cyclohexylmethyl, Cyclopropylamino, Cyclobutylamino, Cyclopentylamino oder Cyclohexylamino, oder für jeweils gegebenenfalls durch Cyano, Nitro, Fluor, Chlor, Brom, Methyl, Ethyl, n- oder i-Propyl, n-, i-, s- oder t-Butyl, Trifluormethyl, Methoxy, Ethoxy, Difluormethoxy oder Trifluormethoxy substituiertes Phenyl oder Benzyl.

$R^2$ steht besonders bevorzugt für Wasserstoff, Hydroxy, Mercapto, Amino, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino, Diethylamino, Ethenyl, Propenyl, Butenyl, Ethinyl, Propinyl, Butinyl, Propenyloxy, Butenyloxy, Propinyloxy, Butinyloxy, Propenylthio, Butenylthio, Propinylthio, Butinylthio, Propenylamino, Butenylamino, Propinylamino oder Butinylamino, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino, Cyclohexylamino, Cyclopropylmethyl, Cyclobutylmethyl, Cyclopentyhnethyl oder Cyclohexylmethyl, oder für jeweils gegebenenfalls durch Cyano, Nitro, Fluor, Chlor, Brom, Methyl, Ethyl, n- oder i-Propyl, n-, i-, s- oder t-Butyl, Trifluormethyl, Methoxy, Ethoxy, Difluormethoxy oder Trifluormethoxy substituiertes Phenyl, Phenoxy, Phenylthio, Phenylamino oder Benzyl.

$R^3$ steht besonders bevorzugt für Nitro, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Acetyl, Propionyl, n- oder i-Butyroyl, Methoxy, Ethoxy, n- oder i-Propoxy, n-, i-, s-oder t-Butoxy, Methoxycarbonyl, Ethoxycarbonyl, n- oder i-Propoxycarbonyl, Methylthio, Ethylthio, n- oder i-Propylthio, n-, i-, s- oder t-Butylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino, oder für jeweils gegebenenfalls durch Cyano, Nitro, Fluor, Chlor, Brom, Methyl, Ethyl, n- oder i-Propyl, n-, i-, s-oder t-Butyl, Trifluormethyl, Methoxy, Ethoxy, n- oder i-Propoxy, n-, i-, s-oder t-Butoxy, Difluormethoxy oder Trifluormethoxy substituiertes Phenyl, Phenoxy, Phenylthio, Phenylsulfinyl, Phenylsulfonyl oder Phenylamino.

$R^4$ steht besonders bevorzugt für Wasserstoff, Nitro, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl,

Acetyl, Propionyl, n- oder i-Butyroyl, Methoxy, Ethoxy, n- oder i-Propoxy, n-, i-, s-oder t-Butoxy, Methoxycarbonyl, Ethoxycarbonyl, n- oder i-Propoxycarbonyl, Methylthio, Ethylthio, n- oder i-Propylthio, n-, i-, s- oder t-Butylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopmpylthio, Cyclobutylthio, Cyclopentylthio, Cyclohexylthio, Cyclopropylamino, Cyclobutylamino, Cyclopentylamino oder Cyclohexylamino, oder für jeweils gegebenenfalls durch Cyano, Nitro, Fluor, Chlor, Brom, Methyl, Ethyl, n- oder i-Propyl, Trifluormethyl, Methoxy, Ethoxy, n- oder i-Propoxy, n-, i-, s- oder t-Butoxy, Difluormethoxy oder Trifluormethoxy substituiertes Phenyl, Phenoxy, Phenylthio, Phenylsulfinyl, Phenylsulfonyl oder Phenylamino.

$R^1$ steht ganz besonders bevorzugt für Wasserstoff, Amino, für jeweils gegebenenfalls durch Fluor, Chlor, Methoxy oder Ethoxy substituiertes Methyl, Ethyl, n- oder i-Propyl, Ethenyl, Propenyl, Ethinyl, Propinyl, Methoxy, Ethoxy, Methylamino oder Ethylamino, für Dimethylamino, oder für gegebenenfalls durch Fluor, Chlor oder Methyl substituiertes Cyclopropyl.

$R^2$ steht ganz besonders bevorzugt für Wasserstoff, Chlor, Brom, für jeweils gegebenenfalls durch Fluor, Chlor, Methoxy oder Ethoxy substituiertes Methyl, Ethyl, n- oder i-Propyl, n-, i- oder s-Butyl, Methoxy, Ethoxy, n- oder i-Propoxy, Methylthio, Ethylthio, n- oder i-Propylthio, Methylamino, Ethylamino, n- oder i-Propylamino, Dimethylamino, Diethylamino, Ethenyl, Propenyl, Butenyl, Ethinyl, Propinyl, Butinyl, Propenyloxy, Butenyloxy, Propinyloxy, Butinyloxy, Propenylthio, Butenylthio, Propinylthio, Butinylthio, Propenylamino, Butenylamino, Propinylamino oder Butinylamino, oder für jeweils gegebenenfalls durch Fluor, Chlor oder Methyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino, Cyclohexylamino, Cyclopropyhnethyl, Cyclobutyhnethyl, Cyclopentylmethyl oder Cyclohexylmethyl.

$R^3$ steht ganz besonders bevorzugt für Nitro, Cyano, Fluor, Chlor, Brom, für jeweils gegebenenfalls durch Fluor, Chlor, Methoxy oder Ethoxy substituiertes Methyl, Ethyl, n- oder i-Propyl, Methoxy, Ethoxy, n- oder i-Propoxy, Methoxycarbonyl, Ethoxycarbonyl, n- oder i-Propoxycarbonyl, Methylthio, Ethylthio, n- oder i-Propylthio, Methylsulfinyl, Ethylsulfinyl, Methylsulfonyl oder Ethylsulfonyl, für jeweils gegebenenfalls durch Fluor, Chlor oder Methyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio oder Cyclohexylthio, oder für jeweils gegebenenfalls durch Cyano, Nitro, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes Phenyl, Phenoxy, Phenylthio, Phenylsulfinyl oder Phenylsulfonyl.

$R^4$ steht ganz besonders bevorzugt für Wasserstoff, Nitro, Cyano, Fluor, Chlor, Brom, oder für jeweils gegebenenfalls durch Fluor, Chlor, Methoxy oder Ethoxy substituiertes Methyl, Ethyl, n- oder i-Propyl, Methoxy, Ethoxy, n-oder i-Propoxy, Methoxycarbonyl, Ethoxycarbonyl, n- oder i-Propoxycarbonyl, Methylthio, Ethylthio, n- oder i-Propylthio, Methylsulfinyl, Ethylsulfinyl, Methylsulfonyl oder Ethylsulfonyl.

An Stelle der reinen Wirkstoffe der Formel (I) können auch Salze der Verbindungen der Formel (I) mit Metallen und/oder mit basischen Stickstoffverbindungen in den erfindungsgemäßen Wirkstoffkombinationen eingesetzt werden.

Hierbei werden Salze der Verbindungen der Formel (I) mit Alkalimetallen, wie z.B. Lithium, Natrium, Kalium, Rubidium oder Cäsium, ganz besonders mit Natrium oder Kalium, mit Erdalkalimetallen, wie z.B. Magnesium, Calcium oder Barium, ganz besonders mit Calcium, oder mit Erdmetallen wie z.B. Aluminium bevorzugt.

Weiter werden Salze der Verbindungen der Formel (I) mit Ammoniak, mit $C_1$-$C_6$-Alkyl-aminen, wie z.B. mit Methylamin, Ethylamin, n- oder i-Propylamin, n-, i-, s-oder t-Butylamin, n-, i-, s- oder t-Pentylamin, mit Di-($C_1$-$C_6$-alkyl)-aminen, wie z.B. Dimethylamin, Diethylamin, Dipropylamin, Diisopropylamin, Dibutylamin, Diisobutylamin, Di-s-butylamin, Dipentylamin, Diisopentylamin, Di-s-pentylamin und Dihexylamin, mit Tri-($C_1$-$C_4$-alkyl)-anünen, wie z.B. Trimethylamin, Triethylamin, Tripropylamin, Tributylamin und N-Ethyl-diisopropylamin, mit $C_3$-$C_6$-Cycloalkyl-aminen, wie z. B. Cyclopentylamin oder Cyclohexylamin, mit Di-($C_3$-$C_6$-cycloalkyl)-aminen, wie z.B. Dicyclopentylamin oder Dicyclohexylamin, mit N-$C_1$-$C_4$-Alkyl-$C_3$-$C_6$-cycloalkylaminen, wie z.B. N-Methyl-cyclopentylamin, N-Ethylcyclopentylamin, N-Methyl-cyclohexylamin oder N-Ethyl-cyclohexylamin, mit N,N-Di-($C_1$-$C_4$-alkyl)-$C_3$-$C_6$-cycloalkyl-aminen, wie z.B. N, N-Dimethyl-cyclopentylamin, N,N-Diethyl-cyclopentylamin, N,N-Dimethyl-cyclohexylamin oder N,N-Diethyl-cyclohexylamin, mit N-$C_1$-$C_4$-Alkyl-di-($C_3$-$C_6$-cycloalkyl)-aminen, wie z.B. N-Methyl-dicyclopentylamin, N-Ethyl-dicyclopentylamin, N-Methyl-dicyclohexylamin oder N-Ethyl-dicyclohexylamin, mit Phenyl-$C_1$-$C_4$-alkyl-aminen, wie z.B. Benzylamin, 1-Phenyl-ethylamin oder 2-Phenyl-ethylamin, mit N-$C_1$-$C_4$-Alkylphenyl-$C_1$-$C_4$-alkyl-aminen, wie z.B. N-Methyl-benzylamin oder N-Ethylbenzylamin, oder mit N,N-Di-($C_1$-$C_4$-alkyl)-phenyl-$C_1$-$C_4$ alkyl-aminen, wie z.B. N,N-Dimethyl-benzylamin oder N,N-Diethyl-benzylamin, oder mit gegebenenfalls annellierten und/oder durch $C_1$-$C_4$-Alkyl substituierten Azinen, wie z.B. Pyridin, Chinolin, 2-Methyl-pyridin, 3-Methyl-pyridin, 4-Methyl-pyridin, 2,4-Dimethyl-pyridin, 2,5-Dimethyl-pyridin, 2,6-Dimethyl-pyridin oder 5-Ethyl-2-methyl-pyridin bevorzugt.

Als basische Verbindungen, welche zur Herstellung der erfindungsgemäß einsetzbaren Salze der Verbindungen der Formel (I) verwendet werden können seien genannt:

Alkalimetall- oder Erdalkalimetall- -acetate, -amide, -carbonate, -hydrogencarbonate, -hydride, -hydroxide oder -alkanolate, wie beispielsweise Natrium-, Kalium- oder Calcium-acetat, Lithium-, Natrium-, Kalium- oder Calcium-amid, Natrium-, Kalium-oder Calcium-carbonat, Natrium-, Kalium- oder Calcium-hydrogencarbonat, Lithium-, Natrium-, Kalium- oder Calcium-hydrid, Lithium-, Natrium-, Kalium- oder Calcium-hydroxid, Natrium- oder Kalium--methanolat, -ethanolat, n- oder i-propanolat, n-, i-, s- oder t-butanolat.

Als Beispiele für die als erfindungsgemäße Mischungspartner zu verwendenden Verbindungen der Formel (I) seien genannt:
2-(2-Chlor-phenylsulfonylaminocarbonyl)-, 2-(2-Brom-phenylsulfonylaminocarbonyl)-, 2-(2-Methyl-phenylsulfonylaminocarbonyl)-, 2-(2-Ethyl-phenylsulfonylanaino-carbonyl)-, 2-(2-n-Propyl-phenylsulfonylaminocarbonyl)-, 2-(2-i-Propyl-phenyl-sulfonylaminocarbonyl)-, 2-(2-Trifluormethyl-phenylsulfonylaminocarbonyl)-, 2-(2-Methoxy-phenylsulfonylaminocarbonyl)-, 2-(2-Ethoxy-phenylsulfonylaminocarbonyl)-, 2-(2-n-Fropoxy-phenylsulfonylaminocarbonyl)-, 2-(2-i-Propoxy-phenyl-sulfonylaminocarbonyl)-, 2-(2-Difluormcthoxy-phenylsulfbnylaminocarbonyl)-, 2-(2-Trifluormethoxy-phenylsulfonylaminocarbonyl)-, 2-(2-Methoxycarbonyl-phenyl-sulfonylaminocarbonyl)-, 2-(2-Ethoxycarbonyl-phenylsulfonylaminocarbonyl)-, 2-(2-n-Propoxycarbonyl-phenylsulfonylaminocarbonyl)-, 2-(2-i-Propoxycarbonyl-phenylsulfonylaminocarbonyl)- und 2-(2-Chlor-6-methyl-phenylsulfonylamino-carbonyl)-4-methyl-5-methoxy-2,4-dihydro-3H-1,2,4-triazol-3-on, -4-methyl-5-ethoxy-2,4-dihydro-3H-1,2,4-triazol-3-on, -4-methyl-5-n-propoxy-2,4-dihydro-3H-1,2,4-triazol-3-on, -4-methyl-5-i-propoxy-2,4-dihydro-3H-1,2,4-triazol-3-on, -4-methyl-5-trifluorethoxy-2,4-dihydro-3H-1,2,4-triazol-3-on, -4-methyl-5-methylthio-2,4-dihydro-3H-1,2,4-triazol-3-on, -4-methyl-5-ethylthio-2,4-dihydro-3H-1,2,4-triazol-3-on, -4-methoxy-5-methyl-2,4-dihydro-3H-1,2,4-triazol-3-on, -4-methoxy-5-etbyl-2,4-dihydro-3H-1,2,4-triazol-3-on, -4-methoxy-5-n-propyl-2,4-dihydro-3H-1,2,4-triazol-3-on, -4-cyclopropyl-5-methoxy-2,4-dihydro-3H-1,2,4-triazol-3-on, -4-cyclopropyl-5-ethoxy-2,4-dihydro-3H-1,2,4-triazol-3-on, -4-cyclopropyl-5-n-propoxy-2,4-dihydro-3H-1,2,4-triazol-3-on, -4-cyclopropyl-5-i-propoxy-2,4-dihydro-3H-1,2,4-triazol-3-on und -4-cyclopropyl-5-trifluorethoxy-2,4-dihydro-3H-1,2,4-triazol-3-on sowie die Natrium- und Kalium-salze dieser Verbindungen.

Die Verbindungen 2-(2-Methoxycarbonyl-phenylsulfonylaminocarbonyl)-4-methyl-5-n-propoxy-2,4-dihydro-3H-1,2,4-triazol-3-on (I-1, Procarbazone oder Propoxycarbazone) und 2-(2-Trifluormethoxy-phenylsulfonylaminocarbonyl)-4-methyl-5-methoxy-2,4-dihydro-3H-1,2,4-triazol-3-on (I-2, Flucarbazone) sowie ihre Natriumsalze - (I-1-Na-Salz, Procarbazone-sodium oder Propoxycarbazone-sodium), (I-2-Na-Salz, Flucarbazone-sodium) - seien als Mischungskomponenten der Formel (I) besonders hervorgehoben.

Die Verbindungen der Formel (I) sind in den oben angegebenen Patentanmeldungen bzw. Patentschriften beschrieben.

Vorzugsweise enthalten die erfindungsgemäßen Mittel einen oder zwei Wirkstoffe der Gruppe 1, ein Wirkstoff der Gruppe 2 und gegebenenfalls einen Wirkstoff der Gruppe 3.

Als Mischungskomponenten aus den Wirkstoffen der Gruppe 3 seien besonders hervorgehoben:

5-Chlor-chinolin-8-oxy-essigsäure-(1-methyl-hexylester) (Cloquintocet-mexyl) und Diethyl-1-(2,4-dichlor-phenyl)-4,5-dihydro-5-methyl-1H-pyrazol-3,5-dicarboxylat (Mefenpyr-diethyl) zur Verbesserung der Verträglichkeit in Getreide.

Als Beispiele für die erfindungsgemäßen Wirkstoffkombinationen seien genannt: methyl-sodium + Mefenpyr-diethyl, Flucarbazone-sodium + Iodosulfuron-methyl-sodium+ Cloquintocet-mexyl.

Procarbazone + Iodosulfuron-methyl-sodium, Procarbazone + Iodosulfuron-methyl-sodium + Mefenpyr-diethyl, Procarbazone + Iodosulfuron-methyl-sodium + Cloquintocet-mexyl.

Es wurde nun überraschend gefunden, daß die oben definierten Wirkstoffkombinationen aus den Arylsulfonylaminocarbonyltriazolinonen der Formel (I) und den oben angeführten Wirkstoffen der Gruppe 2 bei weitgehend guter Nutzpflanzen-Verträglichkeit eine besonders hohe herbizide Wirksamkeit aufweisen und in verschiedenen Kulturen, insbesondere in Weizen, daneben aber auch in Gerste, zur selektiven Bekämpfung von monokotylen und dikotylen Unkräutern verwendet werden können und dass sie auch zur Bekämpfung von monokotylen und dikotylen Unkräutern im semi- und nicht-selektiven Bereich verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Herbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,01 bis 1000 Gewichtsteile, vorzugsweise 0,02 bis 500 Gewichtsteile und besonders bevorzugt 0,05 bis 100 Gewichtsteile Wirkstoff der Gruppe 2.

Als Mischungskomponenten aus den Wirkstoffen der Gruppe 3 werden besonders hervorgehoben:
5-Chlor-chinolin-8-oxy-essigsäure-(1-methyl-hexylester) (Cloquintocet-mexyl), Ethyl-4,5-dihydro-5,5-diphenyl-3-isoxazolcarboxylat (Isoxadifen-ethyl) und Diethyl-1-(2,4-dichlor-phenyl)-4,5-dihydro-5-methyl-1H-pyrazol-3,5-dicarboxylat (Mefenpyr-diethyl) zur Verbesserung der Verträglichkeit in Getreide, sowie 4-Dichloracetyl-1-oxa-4-aza-spiro [4.5]-decan (AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 2,2-Dichlor-N,N-di-2-propenyl-acetamid (Dichlormid), 3-Dichloracetyl-2,2,5-trimethyl-oxazolidin (R-29148) und 1-(2,4-Dichlor-phenyl)-5-trichlormethyl-1H-1,2,4-triazol-3-carbonsäure-ethylester (Fenchlorazol-ethyl) zur Verbesserung der Verträglichkeit in Mais.

Es ist als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe 3 geeignet sind, die schädigende Wirkung von Wirkstoffen der Formel (I) und deren Salzen, gegebenenfalls auch in Kombination mit einem oder mehreren der oben angeführten Wirkstoffe der Gruppe 2, auf die Kulturpflanzen annähernd vollständig aufzuheben, ohne dabei die herbizide Wirksamkeit gegenüber den Unkräutern zu beeinträchtigen.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) oder dessen Mischungen mit Wirkstoffen der Gruppe 20,001 bis 1000 Gewichtsteile, vorzugsweise 0,01 bis 100 Gewichtsteile und besonders bevorzugt 0,1 bis 10 Gewichtsteile Wirkstoff der Gruppe 3.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z. B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. 4-HPPD-, EPSP- und/oder PPO-Hemmstoffe tolerieren, wie z.B. Acuron-Pflanzen.

Die erfindungsgemäßen Wirkstoffe können z.B. bei den folgenden Pflanzen verwendet werden:

<u>Dikotyle Unkräuter der Gattungen:</u> Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Dikotyle Kulturen der Gattungen: Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

Monokotyle Unkräuter der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäß zu verwendenden Wirkstoffkombinationen können sowohl in konventionellen Anbauverfahren (Reihenkulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner sind sind sie für den Einsatz auf Bracheflächen geeignet. Weitere Einsatzgebiete sind Baumschulen, Forst, Grünland und Zierpflanzenbau.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffne, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Oleo DuPont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

Wenn

X = % Schädigung durch Herbizid A (Wirkstoff der Formel I) bei p kg/ha

Aufwandmenge

und

Y = % Schädigung durch Herbizid B (Wirkstoff der Formel II) bei q kg/ha

Aufwandmenge

und

E = die erwartete Schädigung der Herbizide A und B bei p und q kg/ha

Aufwandmenge,

dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

Die Wirkstoffkombinationen der vorliegenden Erfindung weisen in der Tat die Eigenschaft auf, dass ihre gefundene herbizide Wirkung stärker ist als die berechnete, das heißt, dass die neuen Wirkstoffkombinationen synergistisch wirken.

Das geht insbesondere aus den nachfolgenden Beispielen hervor.

**<u>Anwendungsbeispiele:</u>**

Es wurden übliche Formulierungen der getesteten Wirkstoffe benutzt. Procarbazone-und Flucarbazone-sodium wurden als 70 WG Formulierung verwendet. Iodosulfuron in Mischung mit Mefenpyr-diethyl wurde in Form der Fertigformulierung Hussar® 5 WG (15 % Mefenpyr-diethyl) verwendet.

Die notwendige Menge an Wirkstoff bzw. Formulierung wird in mehreren Millilitern (2-3 ml) des Lösungsmittels (Aceton oder DMF) gelöst, ggf. mit einem Emulgator (1 ml) versetzt und mit Wasser auf die gewünschte Konzentration verdünnt.

Mischungen werden dadurch hergestellt, dass eine vorgegebene, gelöste Menge des ersten Wirkstoffs mit der notwendigen Menge des zweiten Wirkstoffs (und insoweit gewünscht mit zusätzlichen Wirkstoffen/Formulierungen oder anderen Inhaltsstoffen) vermischt und danach mit Wasser auf die gewünschte Konzentration verdünnt wird.

Normalerweise wird der Sprühlösung eine oberflächenaktive Verbindung (Renex 36) bei Pre- und Post-Emergence-Versuchen in einer Konzentration von 0,1 % zugesetzt.

Die Menge an Wirkstoff bzw. Formulierung ist so gewählt, dass die gewünschte Aufwandmenge pro ha erreicht wird.

**Beispiel B**

Post-emergence/Gewächshaus

Testpflanzen werden unter kontrollierten Bedingungen (Temperatur und Licht) herangezogen. Sobald die Pflanzen eine Wuchshöhe von 5 bis 15 cm erreicht haben, wird die Testverbindung bzw. die Kombination von Testverbindungen in der Weise aufgespritzt, dass die jeweils gewünschten Wirkstoffmengen pro Flächeneinheit ausgebracht werden. Die Konzentration der Spritzbrühe wird so gewählt, dass in 500 l Wasser/ha die jeweils gewünschten Wirkstoffmengen ausgebracht werden.

Nach der Spritzanwendung werden die Pflanzgefäße im Gewächshaus bei konstanten Licht- und Temperaturbedingungen untergebracht.

Nach ca. 3 Wochen wird der Schädigungsgrad der Pflanzen bonitiert in % Schädigung im Vergleich zur Entwicklung der unbehandelten Kontrolle.

Es bedeuten:

0 % = keine Schädigung (wie unbehandelte Kontrolle)
100 % = totale Vernichtung/Schädigung

Wirkstoffe, Aufwandmengen, Testpflanzen und Resultate gehen aus den nachfolgenden Tabellen hervor, wobei die in den Tabellen verwendeten Bezeichnungen die folgende Bedeutung haben:
a.i. = active ingredient = Wirkstoff

Tabelle B-58

| | **Aufw.- menge g ai/ ha** | **Avena fatua** beobachtet | **Avena fatua** errechnet* |
|---|---|---|---|
| Procarbazone-sodium | 15 | 80 | |
| Iodosulfuron | 8 | 70 | |
| Procarbazone-sodium + Iodosulfuron | 15+8 | 98 | 94 |
| Iodosulfuron geprüft als Hussar® (Iodosulfuron 5 % & Mefenpyr 15 %) | | | |

* Werte errechnet nach Colby

Tabelle B-59

| | **Aufw.- menge g ai/ ha** | **Bromus secalinus** beobachtet | **Bromus secalinus** errechnet* |
|---|---|---|---|
| Procarbazone-sodium | 30 | 90 | |
| | 15 | 90 | |

* Werte errechnet nach Colby

Tabelle B-59 (fortgesetzt)

| | **Aufw.- menge g ai/ ha** | **Bromus secalinus** beobachtet | **Bromus secalinus** errechnet* |
|---|---|---|---|
| Iodosulfuron | 8 | 0 | |
| | 4 | 0 | |
| | 2 | 0 | |
| Procarbazone-sodium + Iodosulfuron | 30+8 | 95 | 90 |
| | 30+4 | 95 | 90 |
| | 15+4 | 95 | 90 |
| | 30+2 | 95 | 90 |
| Iodosulfuron geprüft als Hussar® (Iodosulfuron 5 % & Mefenpyr 15 %) | | | |

* Werte errechnet nach Colby

Tabelle B-60

| | **Aufw.- menge g ai/ ha** | **Setaria viridis** beobachtet | **Setaria viridis** errechnet* |
|---|---|---|---|
| Procarbazone-sodium | 60 | 20 | |
| | 30 | 0 | |
| | 15 | 0 | |
| Iodosulfuron | 4 | 0 | |
| Procarbazone-sodium + Iodosulfuron | 60+4 | 60 | 20 |
| | 30+4 | 40 | 0 |
| | 15+4 | 30 | 0 |
| Iodosulfuron geprüft als Hussar® (Iodosulfuron 5 % & Mefenpyr 15 %) | | | |

* Werte errechnet nach Colby

Tabelle B-61

| | **Aufw.- menge g ai/ ha** | **Polygonum convolvolus** beobachtet | **Polygonum convolvolus** errechnet* |
|---|---|---|---|
| Procarbazone-sodium | 60 | 0 | |
| | 30 | 0 | |
| | 15 | 0 | |
| Iodosulfuron | 2 | 80 | |
| Procarbazone-sodium + Iodosulfuron | 60+2 | 100 | 80 |
| | 30+2 | 95 | 80 |
| | 15+2 | 90 | 80 |
| Iodosulfuron geprüft als Hussar® (Iodosulfuron 5 % & Mefenpyr 15 %) | | | |

* Werte errechnet nach Colby

Tabelle B-62

| | **Aufw.- menge g ai/ ha** | **Avena fatua** beobachtet | **Avena fatua** errechnet* |
|---|---|---|---|
| Flucarbazone-sodium | 15 | 80 | |
| Iodosulfuron | 2 | 10 | |
| Flucarbazone-sodium + Iodosulfuron | 15+2 | 95 | 82 |
| Iodosulfuron geprüft als Hussar® (Iodosulfuron 5 % & Mefenpyr 15 %) | | | |

* Werte errechnet nach Colby

Tabelle B-63

| | **Aufw.- menge g ai/ ha** | **Echinochloa crus-galli** beobachtet | **Echinochloa crus-galli** errechnet* |
|---|---|---|---|
| Flucarbazone-sodium | 60 | 90 | |
| | 30 | 70 | |
| | 15 | 60 | |
| Iodosulfuron | 2 | 20 | |
| Flucarbazone-sodium + Iodosulfuron | 60+2 | 98 | 92 |
| | 30+2 | 95 | 76 |
| | 15+2 | 90 | 68 |
| Iodosulfuron geprüft als Hussar® (Iodosulfuron 5 % & Mefenpyr 15 %) | | | |

* Werte errechnet nach Colby

Tabelle B-64

| | **Aufw.- menge g ai/ ha** | **Cassia tora** beobachtet | **Cassia tora** errechnet* |
|---|---|---|---|
| Flucarbazone-sodium | 15 | 0 | |
| Iodosulfuron | 8 | 80 | |
| Flucarbazone-sodium + Iodosulfuron | 15+8 | 90 | 80 |
| Iodosulfuron geprüft als Hussar® (Iodosulfuron 5 % & Mefenpyr 15 %) | | | |

* Werte errechnet nach Colby

## Patentansprüche

**1.** Mittel, **gekennzeichnet durch** einen Gehalt an einer Wirkstoffkombination bestehend aus

(a) einem Arylsulfonylaminocarbonyltriazolinon der allgemeinen Formel (I)

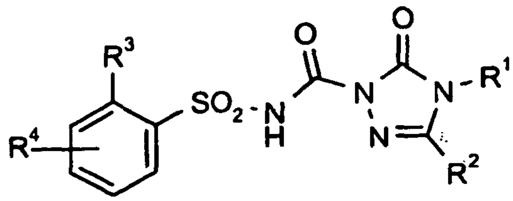

(I)

in welcher

$R^1$ für Wasserstoff, Hydroxy, Amino, Alkylidenamino oder für jeweils gegebenenfalls substituiertes Alkyl, Alkenyl, Alkinyl, Alkoxy, Alkenyloxy, Alkylamino, Dialkylamino, Cycloalkyl, Cycloalkylalkyl, Cycloalkylamino, Aryl oder Arylalkyl steht,

$R^2$ für Wasserstoff, Hydroxy, Mercapto, Amino, Cyano, Halogen oder für jeweils gegebenenfalls substituiertes Alkyl, Alkoxy, Alkylthio, Alkylamino, Dialkylamino, Alkenyl, Alkinyl, Alkenyloxy, Alkinyloxy, Alkenylthio, Alkinylthio, Alkenylamino, Alkinylamino, Cycloalkyl, Cycloalkyloxy, Cycloalkylthio, Cycloalkylamino, Cycloalkylalkyl, Aryl, Aryloxy, Arylthio, Arylamino oder Arylalkyl steht,

$R^3$ für Nitro, Cyano, Halogen oder für jeweils gegebenenfalls substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alkinylthio, Cycloalkyl, Cycloalkyloxy, Cycloalkylthio, Cycloalkylamino, Aryl, Aryloxy, Arylthio, Arylsulfinyl, Arylsulfonyl oder Arylamino steht, und

$R^4$ für Wasserstoff, Nitro, Cyano, Halogen oder für jeweils gegebenenfalls substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alkinylthio, Cycloalkyl, Cycloalkyloxy, Cycloalkylthio, Cycloalkylamino, Aryl, Aryloxy, Arylthio, Arylsulfinyl, Arylsulfonyl oder Arylamino steht,

und/oder einem Salz einer Verbindung der Formel (I)
("Wirkstoffe der Gruppe 1")
und
(b) der Verbindung N-(4-Methoxy-6-methyl-1,3,5-triazin-2-yl)-N'-(5-iod-2-methoxycarbonyl-phenylsulfonyl)-harnstoff-Natriumsalz (Iodosulfuron-methyl-sodium),
("Wirkstoff der Gruppe 2"),
sowie gegebenenfalls
(c) einer die Kulturpflanzen-Verträglichkeit verbessernden Verbindung aus der folgenden Gruppe von Verbindungen:
4-Dichloracetyl-1-oxa-4-aza-spiro[4.5]-decan (AD-67), 1-Dichloracetyl-hexahydro-3,3,8a-trimethylpyrrolo [1,2-a]-pyrimidin-6(2H)-on (Dicyclonon, BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl - vgl. auch verwandte Verbindungen in EP-A-86750, EP-A-94349, EP-A-191736, EP-A-492366), 3-(2-Chlor-benzyl)-1-(1-methyl-1-phenyl-ethyl)-harnstoff (Cumyluron), α-(Cyanomethoximino)-phenylacetonitril (Cyometrinil), 2,4-Dichlor-phenoxyessigsäure (2,4-D), 1-(1-Methyl-1-phenyl-ethyl)-3-(4-methyl-phenyl)-harnstoff (Daimuron, Dymron), 3,6-Dichlor-2-methoxy-benzoesäure (Dicamba), Piperidin-1-thiocarbonsäure-S-1-methyl-1-phenyl-ethylester (Dimepiperate), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazole-ethyl - vgl. auch verwandte Verbindungen in EP-A-174562 und EP-A-346620), 2-Chlor-4-trifluormethyl-thiazol-5-carbonsäure-phenyl-methylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl - vgl. auch verwandte Verbindungen in WO-A-95/07897), Diethyl-1-(2,4-dichlorphenyl)-4,5-dihydro-5-methyl-1H-pyrazol-3,5-dicarboxylat (Mefenpyr-diethyl - vgl. auch verwandte Verbindungen in WO-A-91/07874), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlor-phenyl)-5-phenyl-1H-pyrazol-3-carbonsäure-methylester, 1-(2,4-Dichlor-phenyl)-5-methyl-1H-pyrazol-3-carbonsäure-ethylester, 1-(2,4-Dichlor-phenyl)-5-isopropyl-1H-pyrazol-3-carbonsäure-ethylester, 1-(2,4-Dichlor-phenyl)-5-(1,1-dimethyl-ethyl)-1H-pyrazol-3-carbonsäure-ethylester, 1-(2,4-Dichlor-phenyl)-5-phenyl-1H-pyrazol-3-carbonsäure-ethylester (vgl. auch verwandte Verbindungen in EP-A-269806 und EP-A-333131), 5-(2,4-Dichlor-benzyl)-2-isoxazolin-3-carbonsäure-ethylester, 5-Phenyl-2-isoxazolin-3-carbonsäure-ethylester, 5-(4-Fluor-phenyl)-5-phenyl-2-isoxazolin-3-carbonsäure-ethylester (vgl. auch verwandte Verbindungen in WO-A-91/08202), 5-Chlor-chinolin-8-oxy-essigsäure-(1,3-dimethyl-but-1-yl)-ester, 5-Chlor-chinolin-8-oxy-essigsäure-4-allyloxy-butylester, 5-Chlor-chinolin-8-oxy-essigsäure-1-allyloxy-prop-2-yl-ester, 5-Chlor-chinolin-8-oxy-essigsäure-methylester, 5-Chlor-chinolin-8-oxy-essigsäureethylester, 5-Chlor-chinolin-8-oxy-essigsäure-allylester, 5-Chlor-chinolin-8-oxy-essigsäure-2-oxo-prop-1-yl-ester, 5-Chlor-chinolin-8-oxy-malonsäure-diethylester, 5-Chlor-chinolin-8-oxy-malonsäure-diallylester, 5-Chlor-chinolin-8-oxy-malonsäure-diethylester (vgl. auch verwandte Verbindungen in EP-A-582198), 2-(4-Carboxy-chroman-4-yl)-essigsäure, 3,3'-Dimethyl-4-methoxy-benzophenon, 1-Brom-4-chlormethylsulfonyl-benzol, N-(2-Methoxy-benzoyl)-4-[(methylamino-carbonyl)-amino]-benzolsulfonamid, N-(2-Methoxy-5-methyl-benzoyl)-4-(cyclopropylaminocarbonyl)-benzolsulfonamid, N-Cyclopropyl-4-[(2-methoxy-5-methyl-benzoyl)-amino-sulfonyl]benzamid (vgl. WO-A 99/66795), ("Wirkstoffe der Gruppe 3").

**2.** Mittel nach Anspruch 1, **dadurch gekennzeichnet, dass** das Arylsulfonylaminocarbonyltriazolinon der allgemeinen Formel (I) die Verbindung 2-(2-Methoxycarbonyl-phenylsulfonylaminocarbonyl)-4-methyl-5-n-propoxy-2,4-dihydro-3H-1,2,4-triazol-3-on (Procarbazone oder Propoxycarbazone), die Verbindung 2-(2-Trifluormethoxy-phenylsulfonylaminocarbonyl)-4-methyl-5-methoxy-2,4-dihydro-3H-1,2,4-triazol-3-on (Flucarbazone) oder ein Natrium-Salz dieser beiden Verbindungen (Propoxycarbazone-sodium oder Flucarbazone-sodium) ist.

**3.** Mittel nach Anspruch 1 oder 2, **dadurch gekennzeichnet, dass** die die Kulturpflanzen-Verträglichkeit verbessernde Verbindung (Komponente (c)) aus den nachstehend genannten Wirkstoffen ausgewählt ist:
5-Chlor-chinolin-8-oxy-essigsäure-(1-methyl-hexylester) (Cloquintocet-mexyl) und Diethyl-1-(2,4-dichlor-phenyl)-4,5-dihydro-5-methyl-1H-pyrazol-3,5-dicarboxylat (Mefenpyr-diethyl).

**4.** Mittel nach einem der Ansprüche 1 bis 3, **dadurch gekennzeichnet, dass** auf einen Gewichtsteil Wirkstoff der Formel (I) 0,01 bis 1000 Gewichtsteile des Wirkstoffs der Gruppe 2 (Komponente (b)) entfallen.

**5.** Mittel nach einem der Ansprüche 1 bis 4, **dadurch gekennzeichnet, dass** auf einen Gewichtsteil Wirkstoff der Formel (I) oder dessen Mischungen mit dem Wirkstoff der Gruppe 2 (Komponente (b)) 0,001 bis 1000 Gewichtsteile des die Kulturpflanzen-Verträglichkeit verbessernden Wirkstoffs oder der die Kulturpflanzen-Verträglichkeit verbessernden Wirkstoffe (Komponente (c)) entfallen.

**6.** Verwendung eines Mittels gemäß einem der Ansprüche 1 bis 5 zur Bekämpfung von unerwünschten Pflanzen.

**7.** Verfahren zur Bekämpfung von unerwünschten Pflanzen, **dadurch gekennzeichnet, dass** man Mittel gemäß einem der Ansprüche 1 bis 5 auf die unerwünschten Pflanzen und/oder ihren Lebensraum einwirken lässt.

**8.** Verfahren zur Herstellung eines herbiziden Mittels, **dadurch gekennzeichnet, dass** man ein Mittel gemäß einem der Ansprüche 1 bis 5 mit oberflächenaktiven Mitteln und/oder Streckmitteln vermischt.

## Claims

**1.** Composition, **characterized in that** it comprises an active compound combination consisting of

(a) an arylsulphonylaminocarbonyltriazolinone of the general formula (I)

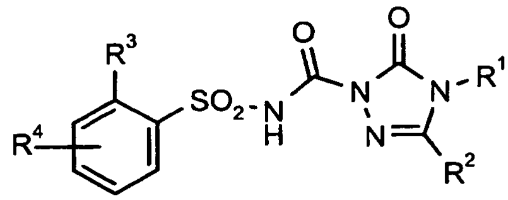

(I)

in which

$R^1$ represents hydrogen, hydroxyl, amino, alkylideneamino or represents in each case optionally substituted alkyl, alkenyl, alkinyl, alkoxy, alkenyloxy, alkylamino, dialkylamino, cycloalkyl, cycloalkylalkyl, cycloalkylamino, aryl or arylalkyl,

$R^2$ represents hydrogen, hydroxyl, mercapto, amino, cyano, halogen or represents in each case optionally substituted alkyl, alkoxy, alkylthio, alkylamino, dialkylamino, alkenyl, alkinyl, alkenyloxy, alkinyloxy, alkenylthio, alkinylthio, alkenylamino, alkinylamino, cycloalkyl, cycloalkyloxy, cycloalkylthio, cycloalkylamino, cycloalkylalkyl, aryl, aryloxy, arylthio, arylamino or arylalkyl,

$R^3$ represents nitro, cyano, halogen or represents in each case optionally substituted alkyl, alkylcarbonyl, alkoxy, alkoxycarbonyl, alkylthio, alkylsulphinyl, alkylsulphonyl, alkylamino, alkenyl, alkenyloxy, alkenylthio, alkenylamino, alkinyl, alkinyloxy, alkinylthio, cycloalkyl, cycloalkyloxy, cycloalkylthio, cycloalkylamino, aryl, aryloxy, arylthio, arylsulphinyl, arylsulphonyl or arylamino, and

$R^4$ represents hydrogen, nitro, cyano, halogen or represents in each case optionally substituted alkyl, alkylcarbonyl, alkoxy, alkoxycarbonyl, alkylthio, alkylsulphinyl, alkylsulphonyl, alkylamino, alkenyl, alkenyloxy, alkenylthio, alkenylamino, alkinyl, alkinyloxy, alkinylthio, cycloalkyl, cycloalkyloxy, cycloalkylthio, cycloalkylamino, aryl, aryloxy, arylthio, arylsulphinyl, arylsulphonyl or arylamino,

and/or a salt of a compound of the formula (I)
("active compounds of group 1")
and
(b) the compound N-(4-methoxy-6-methyl-1,3,5-triazin-2-yl)-N'-(5-iodo-2-methoxycarbonyl-phenylsulphonyl)-urea sodium salt (iodosulfuron-methyl-sodium),
("active compound of group 2"),
and optionally
(c) a compound which improves crop plant compatibility, from the group of compounds below:
4-dichloroacetyl-1-oxa-4-aza-spiro[4.5]-decane (AD-67), 1-dichloroacetyl-hexahydro-3,3,8a-trimethylpyrrolo [1,2-a]-pyrimidin-6(2H)-one (dicyclonon, BAS-145138), 4-dichloroacetyl-3,4-dihydro-3-methyl-2H-1,4-benzoxazine (benoxacor), 1-methyl-hexyl 5-chloro-quinolin-8-oxy-acetate (cloquintocet-mexyl - cf. also related compounds in EP-A-86750, EP-A-94349, EP-A-191736, EP-A-492366), 3-(2-chloro-benzyl)-1-(1-methyl-1-phenyl-ethyl)-urea (cumyluron), α-(cyanomethoximino)-phenylacetonitrile (cyometrinil), 2,4-dichloro-phenoxy acetic acid (2,4-D), 1-(1-methyl-1-phenyl-ethyl)-3-(4-methylphenyl)-urea (daimuron, dymron), 3,6-dichloro-2-methoxy-benzoic acid (dicamba), S-1-methyl-1-phenyl-ethyl piperidine-1-thiocarboxylate (dimepiperate), 2,2-dichloro-N-(2-oxo-2-(2-propenylamino)-ethyl)-N-(2-propenyl)-acetamide (DKA-24), 2,2-dichloro-N,N-di-2-propenyl acetamide (dichlormid), 4,6-dichloro-2-phenyl-pyrimidine (fenclorim), ethyl 1-(2,4-dichloro-phenyl)-5-trichloro-methyl-1H-1,2,4-triazole-3-carboxylate (fenchlorazole-ethyl - cf. also related compounds in EP-A-174562 and EP-A-346620), phenyl-methyl 2-chloro-4-trifluoromethyl-thiazole-5-carboxylate (flurazole), 4-chloro-N-(1,3-dioxolan-2-yl-methoxy)-α-trifluoroacetophenone oxime (fluxofenim), 3-dichloroacetyl-5-(2-furanyl)-2,2-dimethyl-oxazolidine (furilazole, MON-13900), ethyl-4,5-dihydro-5,5-diphenyl-3-isoxazolecarboxylate (isoxadifen-ethyl - cf. also related compounds in WO-A-95/07897), diethyl-1-(2,4-dichloro-phenyl)-4,5-dihydro-5-methyl-1H-gyrazole-3,5-dicarboxylate (mefenpyr-diethyl - cf. also related compounds in WO-A-91/07874), 2-dichloromethyl-2-methyl-1,3-dioxolane (MG-191), 1,8-naphthalic anhydride, α-(1,3-dioxolan-2-yl-methoximino)-phenylacetonitrile (oxabetrinil), 2,2-dichloro-N-(1,3-dioxolan-2-yl-methyl)-N-(2-propenyl)-acetamide (PPG-1292), 3-dichloroacetyl-2,2-dimethyl-oxazolidine (R-28725), 3-dichloroacetyl-2,2,5-trimethyl-oxazolidine (R-29148), methyl 1-(2-chloro-phenyl)-5-phenyl-1H-pyrazole-3-carboxylate, ethyl 1-(2,4-dichloro-phenyl)-5-methyl-1H-pyrazole-3-carboxylate, ethyl 1-(2,4-dichloro-phenyl)-5-isopropyl-1H-pyrazole-3-carboxylate, ethyl 1-(2,4-dichloro-phenyl)-5-(1,1-dimethyl-ethyl)-1H-pyrazole-3-carboxylate, ethyl 1-(2,4-dichloro-phenyl)-5-phenyl-1H-pyrazole-3-carboxylate (cf. also related compounds in EP-A-269806 and EP-A-333131), ethyl 5-(2,4-dichloro-benzyl)-2-isoxazoline-3-carboxylate, ethyl 5-phenyl-2-isoxazoline-3-carboxylate, ethyl 5-(4-fluoro-phenyl)-5-phenyl-2-isoxazoline-3-carboxylate (cf. also related compounds in WO-A-91/08202), 1,3-dimethyl-but-1-yl 5-chloro-quinolin-8-oxyacetate, 4-allyloxy-butyl 5-chloro-quinolin-8-oxy-acetate, 1-allyloxy-prop-2-yl 5-chloro-quinolin-8-oxy-acetate, methyl 5-chloro-quinolin-8-oxy-acetate, ethyl 5-chloro-quinolin-8-oxy-acetate, allyl 5-chloro-quinolin-8-oxy-acetate, 2-oxo-prop-1-yl 5-chloro-quinolin-8-oxyacetate, diethyl 5-chloro-quinolin-8-oxy-malonate, diallyl 5-chloro-quinolin-8-oxy-malonate, diethyl 5-chloro-quinolin-8-oxy-malonate (cf. also related compounds in EP-A-582198), 2-(4-carboxy-chroman-4-yl)-acetic acid, 3,3'-dimethyl-4-methoxy-benzophenone, 1-bromo-4-chloromethylsulphonyl-benzene, N-(2-methoxy-benzoyl)-4-[(methylamino-carbonyl)-amino]-benzenesulphonamide, N-(2-methoxy-5-methyl-benzoyl)-4-(cyclopropylaminocarbonyl)-benzenesulphonamide, N-cyclopropyl-4-[(2-methoxy-5-methylbenzoyl)-amino-sulphonyl]benzamide (cf. WO-A 99/66795),

("active compounds of group 3").

2. Composition according to Claim 1, **characterized in that** the arylsulphonylaminocarbonyltriazolinone of the general formula (I) is the compound 2-(2-methoxycarbonyl-phenylsulphonylaminocarbonyl)-4-methyl-5-n-propoxy-2,4-dihydro-3H-1,2,4-triazol-3-one (procarbazone or propoxycarbazone), the compound 2-(2-trifluoromethoxy-phenylsulphonylaminocarbonyl)-4-methyl-5-methoxy-2,4-dihydro-3H-1,2,4-triazol-3-one (flucarbazone) or a sodium salt of these two compounds (propoxycarbazone-sodium or flucarbazone-sodium).

3. Composition according to Claim 1 or 2, **characterized in that** the compound which improves crop plant compatibility (component (c)) is selected from the active compounds mentioned below:
1-methyl-hexyl 5-chloro-quinolin-8-oxy-acetate (cloquintocet-mexyl) and diethyl 1-(2,4-dichloro-phenyl)-4,5-dihydro-5-methyl-1H-pyrazole-3,5-dicarboxylate (mefenpyr-diethyl).

4. Composition according to any of Claims 1 to 3, **characterized in that** from 0.01 to 1000 parts by weight of the active compound from group 2 (component (b)) are used per part by weight of active compound of the formula (I).

5. Composition according to any of Claims 1 to 4, **characterized in that** from 0.001 to 1000 parts by weight of the active compound(s) which improves/improve crop plant compatibility (component (c)) are used per part by weight of active compound of the formula (I) or its mixtures with the active compound from group 2 (component (b)).

6. Use of a composition according to any of Claims 1 to 5 for controlling undesirable plants.

7. Method for controlling undesirable plants, **characterized in that** compositions according to any of Claims 1 to 5 are allowed to act on the undesirable plants and/or their habitat.

8. Process for preparing a herbicidal composition, **characterized in that** a composition according to any of Claims 1 to 5 is mixed with surfactants and/or extenders.

## Revendications

1. Agent, **caractérisé par** une teneur en une combinaison de substances actives constituée de

(a) une arylsulfonylaminocarbonyltriazolinone de formule générale (I)

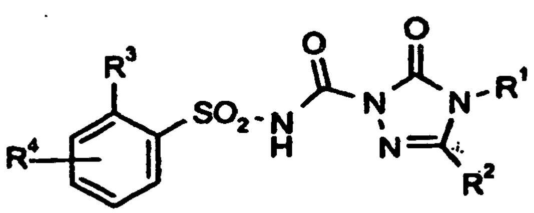

(I)

dans laquelle

$R^1$ représente l'hydrogène, un groupe hydroxy, amino, alkylidènamino ou un groupe alkyle, alcényle, alcynyle, alcoxy, alcényloxy, alkylamino, dialkylamino, cycloalkyle, cycloalkylalkyle, cycloalkylamino, aryle ou arylalkyle, le cas échéant respectivement substitué,

$R^2$ représente l'hydrogène, un groupe hydroxy, mercapto, amino, cyano, un halogène, ou un groupe, le cas échéant respectivement substitué, alkyle, alcoxy, alkylthio, alkylamino, dialkylamino, alcényle, alcynyle, alcényloxy, alcynyloxy, alcénylthio, alcynylthio, alcénylamino, alcynylamino, cycloalkyle, cycloalkyloxy, cycloalkylthio, cycloalkylamino, cycloalkylalkyle, aryle, aryloxy, arylthio, arylamino ou arylalkyle,

$R^3$ représente , un groupe nitro, cyano, un halogène ou un groupe, le cas échéant respectivement substitué, alkyle, alkylcarbonyle, alcoxy, alcoxycarbonyle, alkylthio, alkylsulfinyle, alkylsulfonyle, alkylamino, alcényle, alcényloxy, alcénylthio, alcénylamino, alcynyle, alcynyloxy, alcynylthio, cycloalkyle, cycloalkyloxy, cycloalkylthio, cycloalkylamino, aryle, aryloxy, arylthio, arylsulfinyle, arylsulfonyle ou arylamino, et

$R^4$ représente l'hydrogène, un groupe nitro, cyano, un halogène ou un groupe, le cas échéant respectivement substitué, alkyle, alkylcarbonyle, alcoxy, alcoxycarbonyle, alkylthio, alkylsulfinyle, alkylsulfonyle, alkylamino, alcényle, alcényloxy, alcénylthio, alcénylamino, alcynyle, alcynyloxy, alcynylthio, cycloalkyle, cycloalkyloxy, cycloalkylthio, cycloalkylamino, aryle, aryloxy, arylthio, arylsulfinyle, arylsulfonyle ou arylamino,

et/ou un sel d'un composé de la formule (I)
("substances actives du groupe 1") et

(b) du composé

sel sodique de N-(4-méthoxy-6-méthyle-1,3,5-triazine-2-yle)-N'-(5-iodo-2-méthoxy-carbonyle-phénylsulfonyle)-urée (iodosulfuron-méthyl-sodium),
("substance active du groupe 2"),
ainsi que, le cas échéant,

(c) un composé améliorant la compatibilité avec les plantes cultivées du groupe suivant de composés:

4-dichloracétyl-1-oxa-4-aza-spiro[4.5]-décane (AD-67), 1-dichloracétyle-hexahydro-3,3,8a-triméthylpyrrolo[1,2-a]-pyrimidine-6(2H)-one (dicyclonone, BAS-145138), 4-dichloracétyle-3,4-dihydro-3-méthyle-2H-1,4-benzoxazine (benoxacor), 5-chloroquinoléine-8-oxy-acétate de 1-méthylhexyle (cloquintocet-mexyl - voir également des composés apparentés dans EP-A-86 750, EP-A-94 349, EP-A-191 736, EP-A-492 366), 3-(2-chloro-benzyle)-1-(1-méthyle-1-phényléthyle)-urée (cumyluron), α-(cyanométhoximino)-phénylacétonitrile (cyométrinile), acide 2,4-dichloro-phénoxyacétique (2,4-D), 1-(1-méthyle-1-phényle-éthyle)-3-(4-méthylephényle)-urée (daimuron, dymron), acide 3,6-dichloro-2-methoxybenzoïque (dicamba), pipéridine-1-carbothioate de S-1-méthyle-1-phényléthyle (dimépipérate), 2,2-dichloro-N-(2-oxo-2-(2-propénylamino)-éthyle) -N-(2-propényle)-acétamide (DKA-24), 2,2-dichloro-N,N-di-2-propénylacétamide (dichlormide), 4,6-dichloro-2-phényle-pyrimidine (fenclorim), 1-(2,4-dichloro-phényle)-5-trichlorométhyle-1H-1,2,4-triazole-3-carboxylate d'éthyle (fenchlorazole-éthyle - voir également des composés apparentés dans EP-A-174 562 et EP-A-346 620), 2-chloro-4-trifluorométhyle-thiazol-5-carboxylate de phénylméthyle (flurazole), 4-chloro-N-(1,3-dioxolane-2-yle-méthoxy)-α-trifluoro-acétophénonoxime (fluxofenim), 3-dichloroacétyle-5-(2-furanyle)-2,2-diméthyloxazolidine (Furilazole, MON-13900), 4,5-dihydro-5,5-diphényle-3-isoxazolcarboxylate d'éthyle (isoxadifen-éthyle - voir également des composés apparentés dans WO-A-95/07 897), 1-(2,4-dichlorophényle)-4,5-dihydro-5-méthyle-1H-pyrazole-3,5-dicarboxylate de diéthyle (mefenpyr-diéthyle - voir également des composés apparentés dans WO-A-91/07 874), 2-dichlorométhyle-2-méthyle-1,3-dioxolane (MG-191), 1,8-anhydride naphthalique, α-(1,3-dioxolane-2-yle-méthoximino)-phénylacétonitrile (oxabetrinil), 2,2-dichloro-N-(1,3-dioxolane-2-yle-méthyle)-N-(2-propényle)-acétamide (PPG-1292), 3-dichloroacétyle-2,2-diméthyle-oxazolidine (R-28725), 3-dichloroacétyle-2,2,5-triméthyle-oxazolidine (R-29148), 1-(2-chlorophényle)-5-phényle-1H-pyrazole-3-carboxylate de méthyle, 1-(2,4-dichlorophényle)-5-méthyle-1H-pyrazole-3-carboxylate d'éthyle, 1-(2,4-dichlorophényle)-5-isopropyle-1H-pyrazole-3-carboxylate d'éthyle, 1-(2,4-dichlorophényle)-5-(1,1-diméthyle-éthyle)-1H-pyrazole-3-carboxylate d'éthyle, 1-(2,4-dichlorophényle)-5-phényle-1H-pyrazole-3-carboxylate d'éthyle (voir également des composés apparentés dans EP-A-269 806 et EP-A-333 131), 5-(2,4-dichlorobenzyle)-2-isoxazoline-3-carboxylate d'éthyle, 5-phényle-2-isoxazoline-3-carboxylate d'éthyle, 5-(4-fluorophényle)-5-phényle-2-isoxazoline-3-carboxylate d'éthyle (voir également des composés apparentés dans WO-A-91/08 202), 5-chloroquinoléine-8-oxy-acétate de 1,3-diméthyle-but-1-yle, 5-chloroquinoléine-8-oxy-acétate de 4-allyloxy-butyle, 5-chloroquinoléine-8-oxy-acétate de 1-allyloxy-prop-2-yle, 5-chloroquinoléine-8-oxy-acétate de méthyle, 5-chloroquinoléine-8-oxy-acétate d'éthyle, 5-chloroquinoléine-8-oxy-acétate d'allyle, 5-chloroquinoléine-8-oxy-acétate de 2-oxo-prop-1-yle, 5-chloroquinoléine-8-oxy-malate de diéthyle, 5-chloroquinoléine-8-oxy-malate de diallyle, 5-chloroquinoléine-8-oxy-malate de diéthyle (voir également des composés apparentés dans EP-A-582 198), acide 2-(4-carboxy-chromane-4-yle)-acétique, 3,3'-diméthyle-4-méthoxy-benzophénone, 1-bromo-4-chlorométhylesulfonyle-benzène, N-(2-méthoxy-benzoyle)-4-[(méthylamino-carbonyle)-amino]-benzènesulfonamide, N-(2-méthoxy-5-méthyle-benzoyle)-4-(cyclopropylaminocarbonyle)-benzènesulfonamide, N-cyclopropyle-4-[(2-méthoxy-5-méthyle-benzoyle)-amino-sulfonyle]-benzamide (voir WO-A 99/66 795),

("substances actives du groupe 3"),

**2.** Agent suivant la revendication 1, **caractérisé en ce que** l'arylsulfonylaminocarbonyltriazolinone de la formule générale (I) est le composé 2-(2-méthoxycarbonyle-phényl-sulfonylaminocarbonyle)-4-méthyle-5-n-propoxy-2,4-dihydro-3H-1,2,4-triazole-3-one (procarbazone ou propoxycarbazone), le composé 2-(2-trifluorométhoxy-phénylsulfonyl-aminocarbonyle)-4-méthyle-5-méthoxy-2,4-dihydro-3H-1,2,4-triazole-3-one (flucarbazone) ou un sel de sodium de ces deux composés (propoxycarbazone-sodium ou flucarbazone-sodium).

**3.** Agent suivant la revendication 1 ou 2, **caractérisé en ce que** le composé améliorant la compatibilité avec les plantes cultivées (composant (c)) est sélectionné parmi les substances actives suivantes:

5-chloroquinoléine-8-oxy-acétate de 1-méthylhexyle (cloquintocet-mexyl) et 1-(2,4-dichloro-phényle)-4,5-dihydro-5-méthyle-1H-pyrazole-3,5-dicarboxylate de diéthyle (mefenpyr-diéthyle),

**4.** Agent suivant l'une des revendications 1 à bis 3, **caractérisé en ce qu'**à une partie en poids de la substance active de la formule (I) correspondent 0,01 à 1000 parties en poids de la substance active du groupe 2 (composant (b)).

**5.** Agent suivant l'une des revendications 1 à bis 4, **caractérisé en ce qu'**à une partie en poids de la substance active de la formule (I) ou de ses mélanges avec les substances actives du groupe 2 (composant (b)) correspondent 0,001 à 1000 parties en poids de la substance active améliorant la compatibilité avec les plantes cultivées ou des substances actives améliorant la compatibilité avec les plantes cultivées (composant (c)).

**6.** Utilisation d'un agent suivant l'une des revendications 1 à 5 pour la lutte contre les plantes indésirables.

**7.** Procédé de lutte contre les plantes indésirables, **caractérisé en ce qu'**on fait agir des agents suivant l'une des revendications 1 à 5 sur les plantes indésirables et/ou leur espace vital.

**8.** Procédé de fabrication d'un agent herbicide, **caractérisé en ce qu'**on mélange un agent suivant l'une des revendications 1 à 5 avec des agents actifs en surface et/ou des produits de coupage.